# EUROPEAN PATENT SPECIFICATION

(11) **EP 3 742 017 B1**
(45) Date of publication and mention of the grant of the patent: **16.02.2022**
(21) Application number: 19175508.1
(22) Date of filing: 21.05.2019
(51) Int. Cl.: F16D 55/226

(54) **VEHICLE DISC BRAKE, PIVOT BEARING FOR A DISC BRAKE AND CLAMPING CAP FOR A DISC BRAKE**
FAHRZEUGSCHEIBENBREMSE, DREHLAGER FÜR EINE SCHEIBENBREMSE UND KLEMMKAPPE FÜR EINE SCHEIBENBREMSE
FREIN À DISQUE DE VÉHICULE, SUPPORT DE PIVOT POUR FREIN À DISQUE ET CAPUCHON DE SERRAGE POUR FREIN À DISQUE

(43) Date of publication of application: 25.11.2020
(73) Proprietor: ZF CV Systems Europe BV, 1170 Brussels (BE)
(72) Inventor: Jakobczak, Pawel, 62-860 Opatowek (PL); Macutkiewicz, Piotr, 52-007 Wroclaw (PL); Poziemski, Dariusz, 55-330 Wilkszyn (PL)
(74) Representative: Copi, Joachim

(56) References cited:
- EP-A2- 2 995 826
- DE-A1- 10 236 606
- DE-A1-102004 031 792
- DE-A1-102014 112 241

## Description

The present invention relates to a vehicle brake, in particular, an air disc brake of a commercial vehicle comprising:
- a thrust piece,
- a brake cylinder, and
- a pivot lever operatively coupled to the brake cylinder, wherein the lever is pivotally supported against thrust piece by means of at least one pivot bearing, wherein the thrust piece has at least one mounting interface, and the pivot bearing has at least on mounting element configured to be mounted to the mounting interface of the thrust piece, wherein the mounting element is coupled to a clamping cap, and the clamping cap is configured to engage the mounting interface. The invention further relates to a pivot bearing pivot bearing and a clamping cap for such a disc brake.

Vehicle brakes of the aforementioned type are generally known in the art and typically employed in trucks, buses and the bike. Upon receiving an actuation signal, for example from a brake pedal in the driver cabin or from an electronic control unit, an actuation force is generated by the brake cylinder and transmitted to the brake caliper and the thrust piece by means of the pivot lever. After overcoming an air clearance between brake pads and brake disc, a frictional force is then applied by an inner brake pad advanced by the thrust piece to the rotating brake disc of the disc brake. At the same time a frictional force is applied by an outer brake pad advanced by the brake calliper to the brake disc.

The pivoting movement of the lever advances the thrust piece towards the brake disc. The pivot lever is pivotally supported against the thrust piece by Beschreibung, Seiten 2 bis 3 (Reinschrift)

means of at least one pivot bearing and operatively coupled to the brake cylinder.

Additionally, or alternatively, the lever can be operatively coupled with an adjusting unit for compensation of the brake wear that occurs over time advancing the inner brake pads towards the brake disk.

As the lever is transmitting the forces generated by the brake cylinder, the bearing for said lever has to be positioned accurately all the time, relative to the thrust piece.

However, if the pivot bearing is not installed in the correct position and alignment of the bearing components, a malfunction or failure of the brake may occur later. Therefore, during assembling, installation and transportation large caution and extensive safety measures must be taken to avoid the components from accidentally separating from each other, as that increases the risk of the components not being mounted at the correct position.

When assembling the vehicle disc brake, the bearing may for example be attached to the thrust piece by a hook engaging a bore provided at the thrust piece. In order to avoid the fall off of the bearing during assembling, DE 10 123 965 A1 discloses a cap configured to be engaged with the thrust piece in a non-positive connection. The cap fixes the positive the bearing during assembly in circumferential direction relative to the axis of the pivot bearing, but fails to secure the bearing in a radial direction.

Both DE 10 2014 112241 A1 and EP 2995826 A2 show a bearing of a lever for a brake cylinder which is provided with a pivot arm, in relation to a pressure piece. The bearing is fixed in the pressure piece over an anchor by means of an outward-projecting anchoring pin. The anchor is situated inside a hole of the pressure piece and connect the outward-projecting anchoring pin in a positive manner.

Thus, there is still a risk that the components accidentally separate from each other during assembly, installation and transportation and therefore a need to prove the correct assembling of bearing and thrust piece.

Therefore, it was the object of the invention to suggest a disc brake providing a more secure and yet still simple assembly and installation.

The invention attains the aforementioned object by suggesting a brake according to claim 1. The invention suggests that the clamping cap is configured to secure the mounting element to the thrust piece in a positive connection.

A positive connection in the context of the invention means at least that two parts being engaged to each other by means of a corresponding geometrical form. In contrast, a non-positive connection in the context of the invention means a connection between at least to parts which bases on a force, such as a frictional and/or gravitational force between parts.

The invention is based upon the realization that the mounting the bearing to the thrust piece is appropriately secured by clamping the mounting element and securing said mounting element to the thrust piece in a positive connection. Thus, even if rotating or shaking the vehicle disc brake during assembling or transport, the pivot bearing is securely attached to the thrust piece and in consequence, the assembling is simplified and damage of the bearing is avoided. Hence, the time for assembling, transport and installation is reduced, as the repeated inspection of the correct position and alignment is not necessary any longer.

It will be understood, that a clamping cap is not limited to caps in general and can also be realized by any component configured to be engaged with the mounting element in a positive connection and at the same time configured to be engaged with the mounting interface by a non-positive connection.

According to the invention, the task is solved in that the clamping cap has a pin configured to engage a corresponding recess provided on the mounting element. A clamping cap having such a pin is easy to manufacture while providing a secured engagement for the mounting element by means of a positive connection. A pin provides a comparatively large shell surface extending rotationally symmetrically around the longitudinal axis, compared to the ground area. At least a part of the shell surface, in particular the projection surface facing the recess, is configured engage said recess. Thus, even if moving along its longitudinal axis, a positive connection including a pin provides a reduced risk of disconnecting.

In a particularly preferred embodiment, the clamping cap is formed as a clamping hinge configured to engage a corresponding recess provided at the mounting element. The invention advantageously recognizes that a hinge can enclose the mounting element and in particular, a recess provided at the mounting element, from at least two sides. Thus, providing a repeatable and simplified assembly while at the same time providing improved safety.

Preferably, the mounting interface is formed as a bore and the clamping cap is coupled to said bore. Such a bore is easy to manufacture and provides a cost effective way of receiving the clamping cap in a positive connection.

In a further preferred embodiment, the recess is formed as a cylindrical recess disposed in the center of the mounting element. By providing a cylindrical recess, the invention advantageously recognizes that such a form avoids tilting and tipping of the clamping cap and said recess and thus providing a repeatable engagement of the mounting element and the clamping cap. Further, the recess being disposed in the center of the mounting element provides a uniform support against transverse forces.

In a particularly preferred embodiment, the pivot bearing comprises a housing and the mounting element is formed on said housing. This further simplifies the assembly of the vehicle disc brake and reduces the number of parts to be assembled. Thus, the time for assembly and with it the production costs can be reduced.

Preferably, the clamping cap is attached to the mounting interface by material joining, preferably by means of chemical or thermal joining, after receiving the mounting element.

In the context of the invention, by material joining includes chemical or thermal bonding including, for example, adhesive bonding, welding or soldering. In further preferred embodiments, the clamping cap is attached to the mounting interface by a combination of at least one of: positive connection, non-positive connection or material joining connection.

In a preferred embodiment, the clamping cap comprises or consists of a polymer material, preferably a thermoplastic material. The polymer material provides greater elasticity when compared with the thrust piece, that is in general made of a metal, and therefore enables better elastic deformation of the cap to engage with the thrust piece in a non-positive connection.

Preferably the lever is fork-shaped having one pivot arm and two axial spaced shaft sections, wherein each shaft section is supported against the thrust piece by means of the corresponding pivot bearing. The invention advantageously recognizes that the force acting on the lever is evenly distributed by having two axial spaces shaft sections supported against the thrust piece by means of a corresponding pivot bearing. The force induced by the lever to advance the thrust piece is now evenly distributed to the thrust piece.

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the scope of the invention as defined by the appended claims.

This invention will now be described with reference to the accompanying drawings which illustrate, by way of example and not by way of limitation, one of several possible embodiments of the vehicle disc brake proposed herein, and wherein
- Fig. 1:: illustrates a vehicle disc brake schematically,
- Fig. 2:: illustrates a thrust piece and a pivot bearing for the vehicle disc brake according to Fig. 1 in a perspective view,
- Fig. 3:: illustrates the pivot bearing according to Fig. 2 in a perspective view,
- Fig. 4a: illustrates a detailed view of a preferred embodiment of a mounting element of the pivot bearing according to Fig. 3,
- Fig. 4b: illustrates a detailed view of an alternative preferred embodiment of a mounting element of the pivot bearing according to Fig. 3,
- Fig. 5a: illustrates a detailed view of a preferred embodiment of a clamping cap for a vehicle disc brake according to Fig. 1,
- Fig. 5b: illustrates a detailed view of an alternative preferred embodiment of a clamping cap for a vehicle disc brake according to Fig. 1,
- Fig. 5c: illustrates a detailed view of an alternative preferred embodiment of a clamping cap for a vehicle disc brake according to Fig. 1, and
- Fig. 6: illustrates a detailed view of a preferred embodiment of a thrust piece and a pivot bearing for the vehicle disc brake according to Fig. 1 schematically.

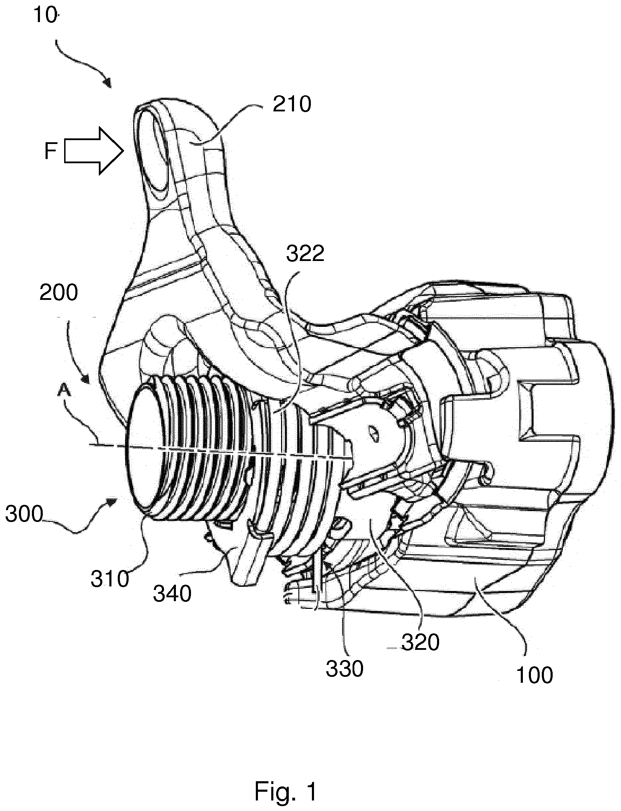

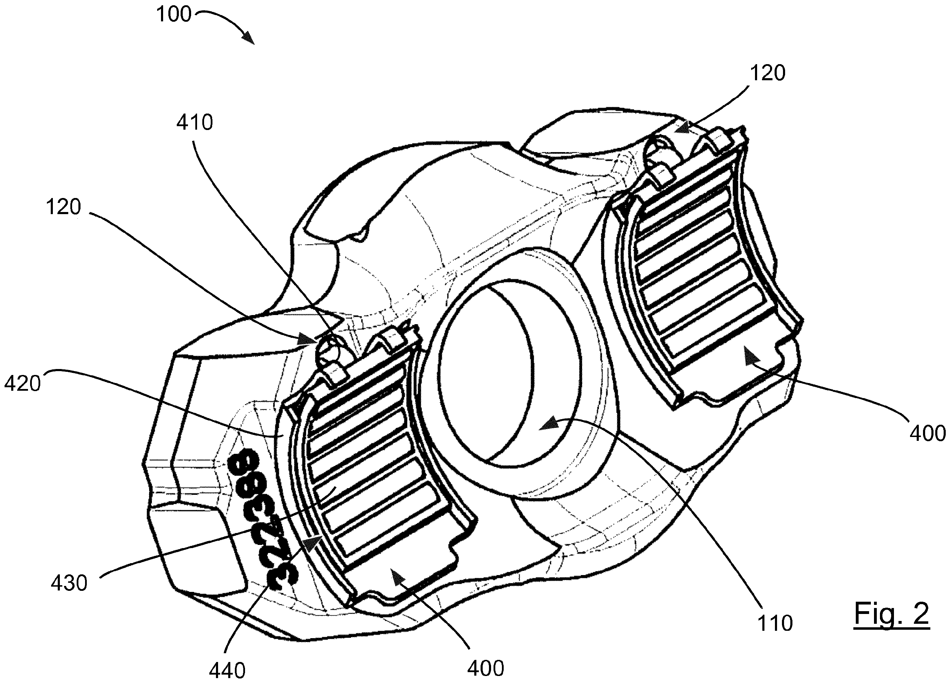

Figs. 1 and 2 illustrate a part of a vehicle disc brake 10 and the components of said disc brake.

According to Figs. 1 and 2, the disc brake 10 comprises a pair of brake pads (not shown) which are spaced apart from one another to accommodate a disc (not shown) inbetween them. The disc brake 10 further comprises a thrust piece 100, which is configured for mounting mounted inside a brake caliper (not shown), a lever 200 configured for being operatively coupled to the brake cylinder (not shown), and an adjuster unit 300 configured for adjusting the brake pad position. The lever 200 is pivotally supported against the thrust piece 100 by means of a pivot bearing 400.

The thrust piece 100 comprises a threaded bore 110 which engages a correspondingly threaded adjustment spindle 310 of the adjuster unit 300.

As best shown in Fig. 1, the lever 200 comprises a pivot arm 210 operatively coupled to the brake cylinder (not shown) and two shaft sections 220, 230 spaced apart from each other extending from the pivot arm 210 toward the thrust piece 100.

The adjuster unit 300 comprises an actuator ring assembly 320 which is placed around the adjustment spindle 310. The actuator ring assembly 320 is operatively coupled to the adjustment spindle 310 through a wrap spring 330 which is disposed between the two elements 310, 320. In operation for adjusting the brake pad position, the actuator ring assembly 320 causes a rotation of the adjustment spindle 310 about a longitudinal axis A in the direction of the disc (not shown).

As best shown in Fig. 1, the actuator ring assembly 320 further comprises a torsion spring 322 which operatively couples an inner guide tube (not shown) of an actuator ring assembly 320 to an actuator ring through a adjusting disc 340 such that during rotation of the adjustment spindle 310 about its longitudinal axis A in a first direction, the torsion spring 322 produces a resilient torque against any relative movement of the actuator ring assembly 320 in relation to the adjustment spindle 310, i.e. any angular movement by which the rotation of the actuator ring assembly 320 exceeds the rotation of the adjustment spindle 310.

In operation for adjusting the brake pad position, the pivot lever 200 may also cooperate with the adjuster unit, wherein the movement of the lever 200 interacts with the actuator ring assembly 320 and causes a rotation of the adjustment spindle 310 about the longitudinal axis A.

Since the lever 200 is divided into two sections 220, 230 at its proximal end facing the thrust piece 100, two pivot bearings 400 are mounted to the thrust piece 100 to support the two sections 220, 230, of Fig. 1.

For this purpose, the lever 200 is provided on each of the two sections 220, 230 facing the thrust piece 100 with a convex curved pressure surface 240. Each pressure surface 240 is partially cylindrical or partially circular with reference to the axis of rotation.

Accordingly, as shown in Fig. 2, the opposite thrust piece 100 has two concave curved supporting surfaces 130 in shell form. These are also partially cylindrical or partially circular with reference to the axis of rotation.

The shell-shaped pivot bearing 400 is mounted to the thrust piece 100 in alignment with the supporting surfaces 130.

The thrust piece 100 provides two mounting interfaces 120 adjacent to the supporting surfaces 130. The mounting interfaces 120 are formed as a cylindrical bore evenly spaced to the axis A.

The pivot bearing 400 provides a mounting element 410 which is formed as a hook, and a housing 420. The mounting element 410 and the housing 420 are formed as one integral part. The pivot bearing 400 further comprises a plurality of rolling elements 430 disposed adjacent to each other in a bearing cage 440. In this embodiment, the rolling elements 430 are formed as cylindrical rolling elements configured to pivotally support the lever 200 (see Fig. 1). With its convex outer side, the bearing housing 420 is supported against the equally concave supporting surfaces 130 on the thrust piece 100.

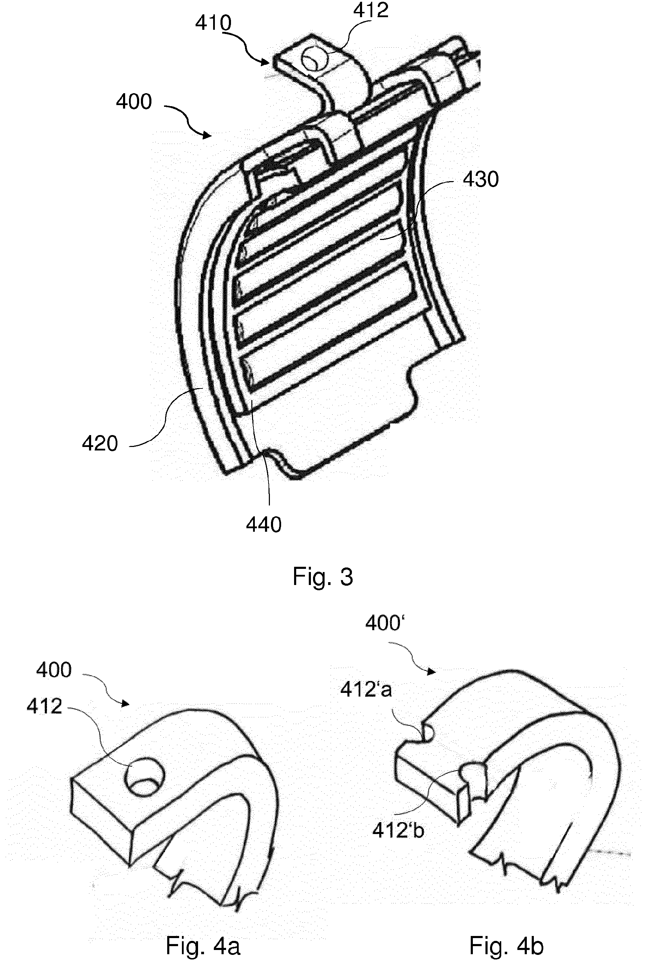

As in particular shown in Fig. 3, the pivot bearing 400 comprises the bearing cage 440 securely engaged with the housing, such that the movement of the bearing cage 440 is enabled in circumferential direction relative to the axis of the pivot bearing 400. The bearing cage 440 is preferably made of plastic. The bearing housing 420 preferably consists of stamped and then deformed metal sheet.

The mounting element 410 is formed as a hook extending towards the thrust piece 100. The direction in which the hook 410 is extending can also be described as a direction having an angle between 0° and 90° relative to the radial direction at a predefined position at the circumference of the bearing housing 420. The direction basically depends on the configuration of the mounting interface 120, for example a bore extending through the thrust piece 100, as well as the diameter of the bearing 400 corresponding to the form of the lever 200.

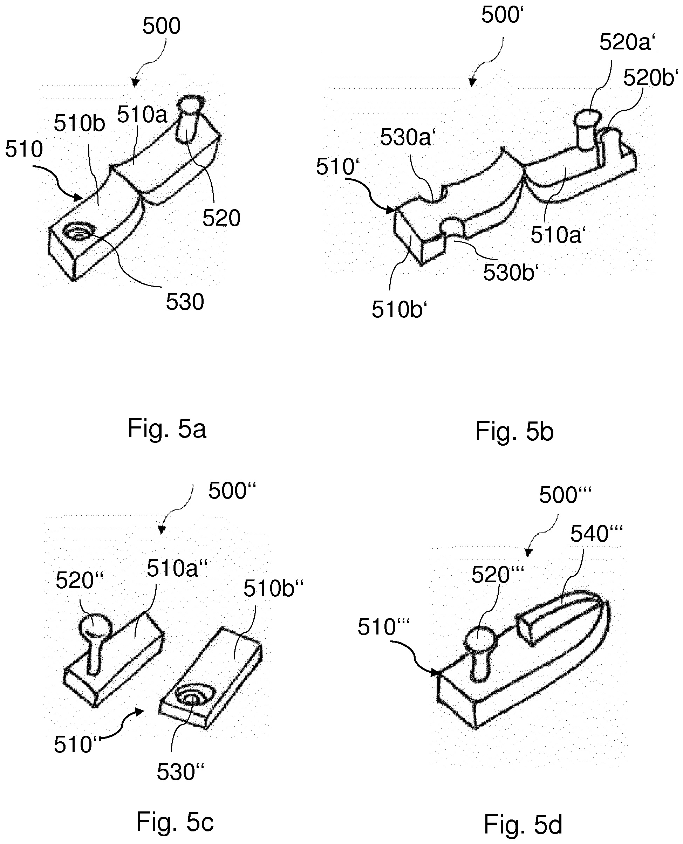

The mounting element 410 comprises a recess 412 disposed at a central position at the distal end of the hook 410. The recess 412 is configured to engaged a clamping cap 500 (see Fig. 5a-5d)in a positive connection.

Fig. 4a shows a preferred embodiment of the mounting element 410 of a pivot bearing 400 according to Fig. 3. As indicated above, the central position of the recess 412 provides an equal distribution of forces introduced by the mounting element 410 acting on the pivot bearing 400. The recess 412 can, for example, be formed as a bore. Other forms, as, for example, a rectangular form are also appropriate.

Fig. 4b illustrates an alternative preferred embodiment of the mounting element 410'. The mounting element 410' comprises two recesses 412a', b' disposed at an outer edge of the mounting element 410'. Similar to the recess 412 illustrated in Fig. 4a, the recesses 412a', b' are configured to engage a clamping cap (not shown) in order to be mounted to the thrust piece 100.

Figs. 5a - 5d illustrate different preferred embodiments of a clamping cap500, 500', 500", 500‴ for a vehicle disc brake according to Fig. 1.

The clamping cap 500 according to Fig. 5a is formed as a clamping hinge having a main part 510 divided in an upper part 510a having a pin 520 and a lower part 510b having a receiving member 530 configured to receive the pin 520 and to be engaged with the pin 520 in a positive connection.

Fig. 5b illustrates first alternative preferred embodiment of the clamping cap 500' configured to be engaged with a mounting element according to Fig. 4b.

The clamping cap 500' comprises a main part 510' divided in an upper part 510a' and a lower part 510b', wherein two pins 520a', b' are formed at the upper part 510a' and two corresponding receiving members 530a', b' are formed at the lower part 510b′ of the clamping cap.

Fig. 5c illustrates a preferred embodiment of the clamping cap 500" comprising a two-piece main part 510" having an upper part 510a", wherein a pin 520" is formed on said upper part, and a lower part 510b", wherein a receiving member 530" is formed on said lower part. The pin 520" and the receiving member 530" are configured to be engaged with each other in a positive connection.

Fig. 5d illustrates a clamping cap having a main part 510‴, wherein a pin 520'" is formed on said main part. The main part 510‴ further comprises a support member 540‴ configured to be in contact with the mounting interface 120 provided at the thrust piece 100, such that the clamping cap can be engaged with the thrust piece 100 in a non-positive connection.

The clamping caps 500, 500', 500" are configured to receive a mounting element 410 between the upper and the lower parts and further configured to engage the mounting element 410 in a positive connection.

Thus, when the clamping caps 500, 500', 500", 500‴ have received the mounting element 410, 410', they can be disposed in the corresponding mounting elements that are according to the embodiment, shown in Fig. 2 formed as a bore. As the clamping caps are preferably formed from a polymer material, the clamping cap are at least partly elastic and can be engaged with the mounting interfaces 120 in a non-positive connection and thereby mounting the bearing 400 to the thrust piece 100.

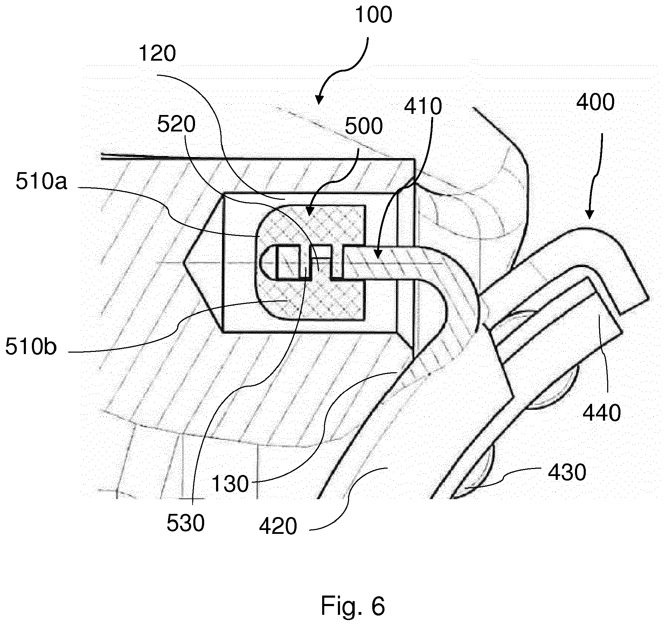

Figure 6 shows a detailed sectional view of the brake assembly shown in Figure 1. In particular, Figure 6 illustrates the thrust piece 100 and the pivot bearing 400 mounted to the thrust piece 100.

The thrust piece 100 provides a mounting interface 120 adjacent to a supporting surface 130. The mounting interface 120 is formed as a cylindrical bore.

The shell-shaped pivot bearing 400 is mounted to the thrust piece 100 in alignment with the supporting surface 130.

The pivot bearing 400, also shown in Fig. 3, comprises a bearing cage 440 securely engaged with the housing, such that the movement of the bearing cage 440 is enabled in circumferential direction relative to the axis of the bearing 400. The bearing cage 440 is preferably made of plastic. The bearing housing 420 preferably consists of stamped and then deformed metal sheet.

The mounting element 410 is formed as a hook extending towards the thrust piece 100 and comprises a recess 412 disposed at a central position at the distal end of the hook 410. The recess 412 is configured to be engaged with a clamping cap 500, according to the embodiment shown in Figure 5a.

The clamping cap 500 is formed as a clamping hinge having a main part 510 divided in an upper part 510a having a pin 520 and a lower part 510b having a receiving member 530 configured to receive the pin 520 and to be engaged with the pin 520 in a positive connection.

### List of reference signs (part of the specification)

- 10: vehicle disc brake
- 100: thrust piece
- 110: threaded bore
- 120: mounting interface
- 130: supporting surface
- 200: lever
- 210: pivot arm
- 220, 230: shaft sections
- 240: pressure surfaces
- 300: adjuster unit
- 310: spindle
- 320: actuator ring assembly
- 322: torsion spring
- 330: wrap spring
- 340: adjusting disc
- 400: pivot bearing
- 410, 410': mounting element
- 412, 412a', 412b': recess
- 420: housing
- 430: rolling elements
- 440: bearing cage
- 500, 500', 500", 500‴: clamping cap
- 510, 510′, 510", 510‴: main part
- 510a, 510a', 510a": upper part
- 510b, 510b', 510b": lower part
- 520, 520', 520", 520‴: pin
- 520a', b': pin
- 530, 530', 530", 530‴: receiving member
- 540": support member
- A: axis

## Claims

1. Vehicle brake (10), in particular an air disc brake of a commercial vehicle, comprising: a thrust piece (100), a brake cylinder, and a pivot lever (200) operatively coupled to the brake cylinder, wherein the lever (200) is pivotally supported against the thrust piece (100) by means of at least one pivot bearing (400), wherein the thrust piece (100) has at least one mounting interface (120), and the pivot bearing (400) has at least one mounting element (410, 410') configured to be mounted to the mounting interface (120) of the thrust piece (100), wherein the mounting element (410, 410') is coupled to a clamping cap (500, 500', 500", 500‴), and the clamping cap (500, 500', 500", 500‴) is configured to be engaged with the mounting interface (120), wherein the clamping cap (500, 500', 500", 500‴) is configured to secure the mounting element (410, 410') to the thrust piece (100) in a positive connection, **characterized in that** the clamping cap (500, 500', 500", 500‴) has a pin (520, 520', 520", 520‴) configured to engage a corresponding recess (412, 412a', 412b') provided on the mounting element (410, 410').

2. Vehicle brake (10) according to according to claim 1, wherein the clamping cap (500, 500', 500", 500‴) is formed as a clamping hinge (500') having a pin (520, 520', 520", 520‴) and being configured to engage a corresponding recess (412, 412a', 412b') provided at the mounting element (410, 410').

3. Vehicle brake (10) according to any one of the proceeding claims, wherein the mounting interface (120) is formed as a bore and the clamping cap (500, 500', 500", 500‴) is coupled to said bore.

4. Vehicle brake (10) according to according to one of the claims 2 to 3, wherein the recess (412) is formed as a cylindrical recess (412) disposed in the centre of the mounting element (410).

5. Vehicle brake (10) according to any one of the proceeding claims, wherein the pivot bearing (400) comprises a housing (420) and the mounting element (410, 410') is formed on said housing (420).

6. Vehicle brake (10) according to any one of the proceeding claims, wherein the clamping cap (500, 500', 500", 500‴) is attached to the mounting interface (120) by material joining, preferably by means of chemical or thermal joining, after receiving the mounting element (410, 410′).

7. Vehicle brake (10) according to any one of the proceeding claims, wherein the clamping cap (500, 500', 500", 500‴) comprises or consists of a polymer material, preferably a thermoplastic material.

8. Vehicle brake (10) according to any one of the proceeding claims, wherein the lever (200) is fork shaped, having one pivot arm (210) and two axial spaced shaft sections (220, 230), wherein each shaft section is supported against the thrust piece (100) by means of a corresponding pivot bearing (400).

## Patentansprüche

1. Fahrzeugbremse (10), insbesondere eine Luftscheibenbremse eines Nutzfahrzeugs, die Folgendes umfasst: ein Druckstück (100), einen Bremszylinder und einen Schwenkhebel (200), der an den Bremszylinder wirkgekoppelt ist, wobei der Hebel (200) über mindestens ein Schwenklager (400) schwenkbar vom Druckstück (100) gestützt wird, wobei das Druckstück (100) mindestens eine Montageschnittstelle (120) aufweist und das Schwenklager (400) mindestens ein Montageelement (410, 410') aufweist, das dazu ausgelegt ist, an der Montageschnittstelle (120) des Druckstücks (100) montiert zu sein, wobei das Montageelement (410, 410') an eine Klemmkappe (500, 500', 500", 500‴) gekoppelt ist und die Klemmkappe (500, 500', 500", 500‴) dazu ausgelegt ist, in die Montageschnittstelle (120) einzugreifen, wobei die Klemmkappe (500, 500', 500", 500‴) dazu ausgelegt ist, das Montageelement (410, 410′) in einer positiven Verbindung am Druckstück (100) zu sichern, **dadurch gekennzeichnet, dass** die Klemmkappe (500, 500', 500", 500‴) einen Stift (520, 520', 520", 520‴) aufweist, der dazu ausgelegt ist, in eine entsprechende Ausnehmung (412, 412a', 412b'), die auf dem Montageelement (410, 410') bereitgestellt ist, einzugreifen.

2. Fahrzeugbremse (10) nach Anspruch 1, wobei die Klemmkappe (500, 500', 500", 500‴) als ein Klemmscharnier (500′) gebildet ist, das einen Stift (520, 520', 520", 520‴) aufweist und dazu ausgelegt ist, in eine entsprechende Ausnehmung (412, 412a', 412b') einzugreifen, die am Montageelement (410, 410') bereitgestellt ist.

3. Fahrzeugbremse (10) nach einem der vorhergehenden Ansprüche, wobei die Montageschnittstelle (120) als eine Bohrung gebildet ist und die Klemmkappe (500, 500', 500", 500‴) an die Bohrung gekoppelt ist.

4. Fahrzeugbremse (10) nach einem der Ansprüche 2 bis 3, wobei die Ausnehmung (412) als eine zylindrische Ausnehmung (412) gebildet ist, die in der Mitte des Montageelements (410) angeordnet ist.

5. Fahrzeugbremse (10) nach einem der vorhergehenden Ansprüche, wobei das Schwenklager (400) ein Gehäuse (420) umfasst und das Montageelement (410, 410') auf dem Gehäuse (420) gebildet ist.

6. Fahrzeugbremse (10) nach einem der vorhergehenden Ansprüche, wobei die Klemmkappe (500, 500', 500", 500‴) nach Aufnehmen des Montageelements (410, 410') mittels einer Materialverbindung, vorzugsweise mittels einer chemischen oder thermischen Verbindung, an der Montageschnittstelle (120) befestigt wird.

7. Fahrzeugbremse (10) nach einem der vorhergehenden Ansprüche, wobei die Klemmkappe (500, 500', 500", 500‴) ein Polymermaterial, vorzugsweise ein thermoplastisches Material, umfasst oder aus demselben besteht.

8. Fahrzeugbremse (10) nach einem der vorhergehenden Ansprüche, wobei der Hebel (200) gabelförmig ist und einen Schwenkarm (210) und zwei axial beabstandete Wellenabschnitte (220, 230) aufweist, wobei jeder Wellenabschnitt mittels eines entsprechenden Schwenklagers (400) vom Druckstück (100) gestützt wird.

## Revendications

1. Frein de véhicule (10), en particulier un frein à disque pneumatique d'un véhicule utilitaire, comprenant : une pièce de poussée (100), un cylindre de frein, et un levier de pivot (200) couplé, de manière opérationnelle, au cylindre de frein, dans lequel le levier (200) est supporté, de manière pivotante, contre la pièce de poussée (100) au moyen d'au moins un palier pivotant (400), dans lequel la pièce de poussée (100) a au moins une interface de montage (120), et le palier pivotant (400) a au moins un élément de montage (410, 410') configuré pour être monté sur l'interface de montage (120) de la pièce de poussée (100), dans lequel l'élément de montage (410, 410') est couplé à un capuchon de serrage (500, 500', 500", 500‴) et le capuchon de serrage (500, 500', 500", 500‴) est configuré pour être mis en prise avec l'interface de montage (120), dans lequel le capuchon de serrage (500, 500', 500", 500‴) est configuré pour fixer l'élément de montage (410, 410') sur la pièce de poussée (100) dans un raccordement positif, **caractérisé en ce que** le capuchon de serrage (500, 500', 500ʺ, 500‴) a une broche (520, 520', 520", 520‴) configurée pour mettre en prise un évidement (412, 412a', 412b') correspondant prévu sur l'élément de montage (410, 410').

2. Frein de véhicule (10) selon la revendication 1, dans lequel le capuchon de serrage (500, 500', 500", 500‴) est formé comme une charnière de serrage (500') ayant une broche (520, 520', 520", 520‴) et étant configuré pour mettre en prise un évidement (412, 412a', 412b') correspondant prévu au niveau de l'élément de montage (410, 410').

3. Frein de véhicule (10) selon l'une quelconque des revendications précédentes, dans lequel l'interface de montage (120) est formée comme un alésage et le capuchon de serrage (500, 500', 500", 500‴) est couplé audit alésage.

4. Frein de véhicule (10) selon l'une des revendications 2 à 3, dans lequel l'évidement (412) est formé comme un évidement cylindrique (412) disposé dans le centre de l'élément de montage (410).

5. Frein de véhicule (10) selon l'une quelconque des revendications précédentes, dans lequel le palier pivotant (400) comprend un boîtier (420) et l'élément de montage (410, 410') est formé sur ledit boîtier (420).

6. Frein de véhicule (10) selon l'une quelconque des revendications précédentes, dans lequel le capuchon de serrage (500, 500', 500", 500‴) est fixé sur l'interface de montage (120) par assemblage de matériau, de préférence au moyen d'assemblage chimique ou thermique, après avoir reçu l'élément de montage (410, 410').

7. Frein de véhicule (10) selon l'une quelconque des revendications précédentes, dans lequel le capuchon de serrage (500, 500', 500", 500‴) comprend ou se compose d'un matériau polymère, de préférence d'un matériau thermoplastique.

8. Frein de véhicule (10) selon l'une quelconque des revendications précédentes, dans lequel le levier (200) est en forme de fourche, ayant un bras de pivot (210) et deux sections d'arbre axiales espacées (220, 230), dans lequel chaque section d'arbre est supportée contre la pièce de poussée (100) au moyen d'un palier pivotant (400) correspondant.
